(19) Europäisches Patentamt / European Patent Office / Office européen des brevets

(11) **EP 2 413 609 B1**

(12) **EUROPEAN PATENT SPECIFICATION**

(45) Date of publication and mention
of the grant of the patent:
**30.04.2014 Bulletin 2014/18**

(51) Int Cl.:
**H04N 13/04** (2006.01)    **G06F 3/044** (2006.01)

(21) Application number: **11172045.4**

(22) Date of filing: **30.06.2011**

(54) **Active type display apparatus and driving method for providing stereographic image**

Aktivanzeigevorrichtung und Antriebsverfahren zur Bereitstellung stereographischer Bilder

Appareil d'affichage de type actif et procédé de commande pour fournir une image stéréographique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2010 KR 20100073201**

(43) Date of publication of application:
**01.02.2012 Bulletin 2012/05**

(73) Proprietor: **Pantech Co., Ltd.
Seoul 121-792 (KR)**

(72) Inventor: **Seok, Jin Woo
121-792 Seoul (KR)**

(74) Representative: **Herzog, Markus et al
Weickmann & Weickmann
Patentanwälte
Postfach 86 08 20
81635 München (DE)**

(56) References cited:
**WO-A1-2009/069358    US-A- 5 493 427
US-A1- 2003 161 040    US-A1- 2009 256 821**

**Description**

BACKGROUND

1. FIELD

This disclosure relates to an active-type stereographic image display apparatus having a touch function and a driving method thereof.

2. DISCUSSION OF THE BACKGROUND

An autostereographic image technology may be implemented using a parallax phenomenon of two eyes. In order to use the parallax of the two eyes, a display element in which a pixel for the left eye and a pixel for the right eye are separated from each other and an image filter for individually displaying a left eye image and a right eye image may be used. Conventionally, a parallax barrier, a lenticular lens, and the like may be used as the image filter for autostereographic images.

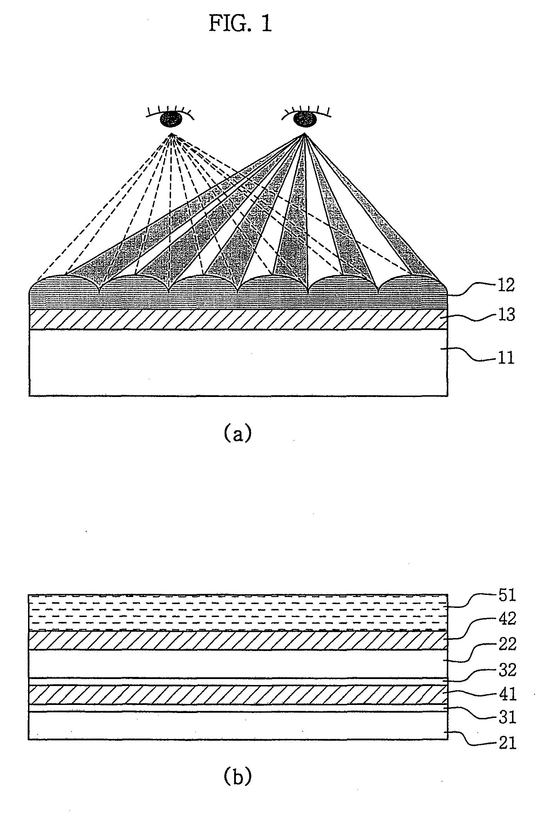

FIG. 1 (a) is a diagram illustrating a conventional stereographic image apparatus using a lenticular lens, in which a display element 11 and a lenticular lens 12 are adhered to an optically clear adhesive (OCA) 13, which is interposed between the display element 11 and the lenticular lens 12.

FIG. 1 (b) is a diagram schematically illustrating a cross-sectional structure of a conventional capacitive touchscreen. The touch screen may include two transparent films 21 and 22 on which transparent electrode layers 31 and 32 may be deposited, and a protection film 51. The films may be adhered through optically clear adhesives 41 and 42.

In an example, where an autostereographic imaging and touching function are to be simultaneously implemented, both the stereographic image part of FIG. 1 (a) and the touch part of FIG. 1 (b) may be desired. An autostereographic image part may display a separate image for each of the left and right eyes but the provided image may have a reduced horizontal resolution (i.e., half of that of a 2D display element with the same size, resulting in degradation of image quality). In addition, if the touchscreen is attached to the autostereographic image display, the image quality may be additionally degraded due to the thickness of the apparatus. Further, there may be design and cost problems associated with the increased thickness of the entire display apparatus.

In addition, the conventional autostereographic image technology such as the parallax barrier and the lenticular lens may only have a single focal region and accordingly display an image at a fixed focal length. As a result, a user may have to be positioned at optimized distance and viewpoint to appropriately see the provided images. Therefore, if the' position of the user is changed, it may be difficult to continuously provide high quality stereographic images.

WO 2009/069358 A1 describes a multi-view display with a touch screen and US 2009/256821 A1 describes a matrix-type touch screen display. Further stereoscopic displays are described in US 5493427 A and US 2003/161040 A1 which include adjusting display characteristics to the observer position using variable lenses and variable distance between display panel and lenses.

SUMMARY

Embodiments of the present invention provide active-type stereographic image displays as defined by claims 1-10 and methods for driving these displays as defined by claims 11-14.

It is to be understood that both forgoing general descriptions and the following detailed description are exemplary and explanatory and are intended to provide further explanation of the invention as claimed. Other features and aspects will be apparent from the following detailed description, the drawings, and the claims.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 (a) and FIG. 1 (b) are diagrams illustrating structures of a stereographic image display and a touch screen according to a conventional art.

FIG. 2 is an exploded perspective view of an active-type stereographic display apparatus according to an exemplary embodiment of the invention.

FIG. 3 is a cross-sectional view illustrating an I-I' section of FIG. 2 according to an exemplary embodiment of the invention.

FIG. 4 is a diagram illustrating an operation of controlling a focal length by controlling the position of a lens array in the active-type stereographic image display apparatus to according to an exemplary embodiment of the invention.

FIG. 5 is a diagram illustrating an operation of controlling the radius of curvature of the lens array in the active-type stereographic image display apparatus according to an exemplary embodiment of the invention.

FIG. 6 is a diagram illustrating an operation of controlling the focal length with reference to FIG. 5 according to an exemplary embodiment of the invention.

FIG. 7 is a diagram illustrating an operation of measuring a position of a user by the active-type stereographic display apparatus according to an exemplary embodiment of the invention.

FIG. 8 is a flowchart of a method for driving the active-type stereographic image display apparatus according to an exemplary embodiment of the invention.

DETAILED DESCRIPTION OF THE ILLUSTRATED EMBODIMENTS

The invention is described more fully hereinafter with reference to the accompanying drawings, in which exemplary embodiments are shown. This disclosure may, however, be embodied in many different forms and should not be construed as limited to the embodiments set forth herein. Rather, these exemplary embodiments are provided so that this disclosure is thorough and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Hereinafter, an active-type stereographic image display apparatus and a driving method thereof according to exemplary embodiments will be described in more detail with reference to the accompanying drawings.

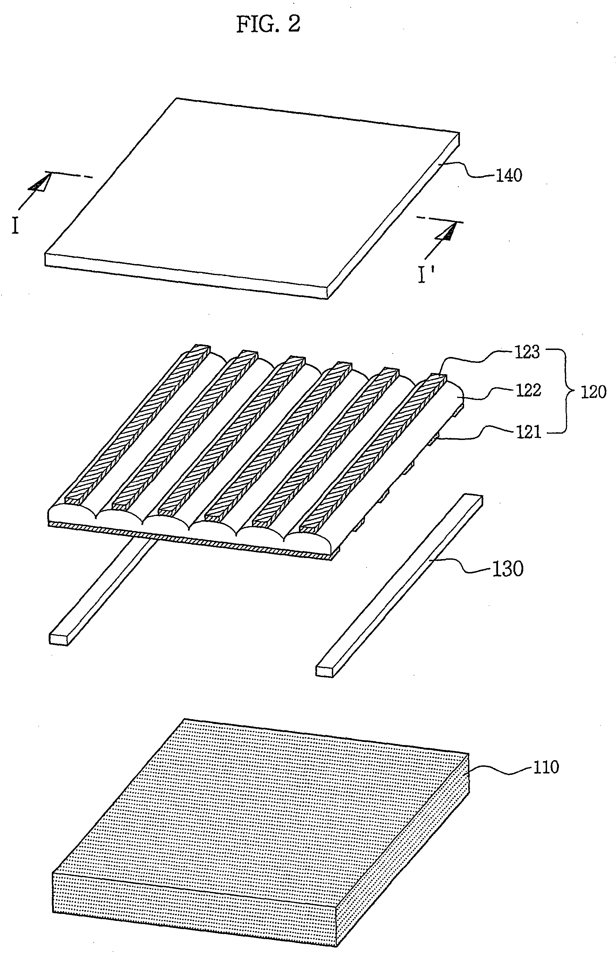

It is noted that these "exemplary embodiments" correspond to examples of the invention as filed. They do not necessarily correspond to embodiments as claimed in the patent granted. For an embodiment of the invention as claimed, the reader is referred to Fig. 2.

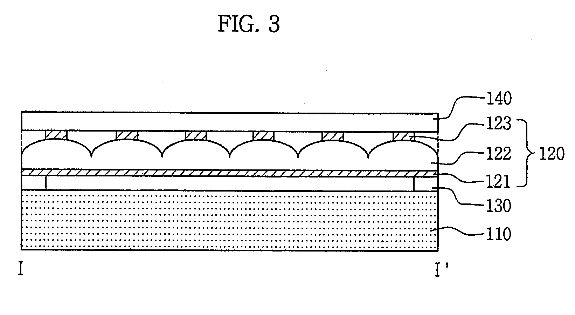

FIG. 2 is an exploded perspective view of an active-type stereographic display apparatus according to an exemplary embodiment of the invention. FIG. 3 is a cross-sectional view illustrating an I-I' section of FIG. 2 according to an exemplary embodiment of the invention.

As shown in FIG. 2, the active-type stereographic image display apparatus includes an image display unit 110 to output an image, a touch sensing unit 120, a lens drive control unit 130, and a protection layer 140.

The image display unit 110 is a display unit. In an example, the display unit 110 may be a liquid crystal display (LCD) panel, an organic light emitting diode (OLED) panel, or other similar displays, which may include pixels in a matrix form.

In the image display unit 110, a pixel line for the left eye and a pixel line for the right eye may cross with each other in various directions, and each pixel may include a pixel for the left eye and a pixel for the right eye, which are arranged alternately. Accordingly, the image display unit 110 may output a separate image through the pixel for the left eye and the pixel for the right eye to allow the two eyes to see different images and to perceive the different images that the two eyes of the user see as a stereographic image.

Further, images outputted from the image display unit 110 may be separated into a left eye direction and a right eye direction through a lens array 122, thereby generating a stereographic effect.

The touch sensing unit 120 positioned on the image display unit 110 senses a touch position. In an example, the touching sensing unit 120 may sense a touch position through a first transparent electrode layer 121 and a second transparent electrode layer 123 arranged to cross with each other. Further, the first electrode layer 121 and the second transparent electrode layer 123 separates the images outputted from the image display unit 110 into a left eye image and a right eye image based on the refractive index of light through the lens array 122.

In an example, the touch sensing unit 120 may have a structure in which the first transparent electrode layer 121 and the second transparent electrode layer 123 are separated from each other with the lens array 122 interposed between the two layers integrated into one body. Accordingly, the touch function and the image filter function may be implemented in a single structure.

In an example, the touch sensing unit 120 may provide a capacitive touchscreen function through the first transparent electrode layer 121 and the second transparent electrode layer 123 deposited on both surfaces of the translucent lens array 122 to cross with each other. That is, the touch sensing unit 120 may sense a touch position by sensing change in static electricity and current between the first transparent electrode layer 121 and the second transparent electrode layer 123, which may be separated from each other at an interval, if a touch is initiated by a user.

Accordingly, since the image filter part for implementing a stereographic image and the part for implementing the touch function are integrated into one body, the number of layers may be reduced. Further, as the entire layer structure becomes simpler in design, the driving lens control may become easier. In addition, through the integrated structure, a transparent film, which may be used for a supporting member of a transparent conductive material, may be excluded. Thus, the entire thickness of the structure may be reduced, and image quality degradation due to the use of the transparent film may be avoided.

Patterns of the first transparent electrode layer 121 and the second transparent electrode layer 123 may be formed into a matrix arrangement to determine a touch position if a user input is received. For example, the pattern of the first transparent electrode layer 121 may be formed in a longitudinal direction, and the pattern of the transparent electrode layer 123 may be formed in a transverse direction to cross with.

The lens array 122 is an image filter in an optical structure, which uses a light refraction phenomenon to display a left eye image and a right eye image by separating the images outputted through the image display unit 110 into a left side image and a right side image. Since the lens array 122 uses light refraction, it may be designed in consideration of complex factors including the pixels for the left eye and the pixels for the right eye of the image display unit 110, the size and shape of the lens, distances, and the like. The image display unit 110 may employ a method of separately operating the pixel for the left eye and the pixel for the right eye, and image contents may also be separately produced to provide a stereographic image. In a case of displaying a 2D image such as text which does not require a stereographic image, the same image may be displayed on the pixel for the left eye and the pixel for the right eye.

In an example, the hemispheres of the lenses of the lens array 122 may be arranged to be aligned with the pixels for the left eye and the pixels for the right eye of the image display unit 110 positioned thereunder. The pixels for the left eye and the right eye may be aligned such that the left eye image and the right eye image are accurately separated through each lens into a stereographic image.

Further in an example, a convex lens type or a concave lens type of lenticular lens may be used in the lens array 122 to provide an autostereographic image. In addition, a structure capable of controlling the focus of the stereographic image through a shape change or a position change of the lens array 122 may be applied to provide an autostereographic image.

In an example, the lens driving control unit 130 may control the focal length of the stereographic image provided through the shape change or the position change of the lens array 122 by controlling the lens array 122. Generally, a singe focal region in which a stereographic image is seen at a limited viewpoint may be arranged by changing the transmittance of light using a fixed hemispheric lens. In comparison, by controlling a distance between the image display unit 110 and the lens array 122 through the lens driving control unit 130, multiple focusing regions may be implemented and the focal length of the stereographic image may be adjusted depending on the distance from the user. Alternatively, similar effects may be achieved by changing the radius of curvature of the lenses constituting the lens array 122.

The protection layer 140 is arranged to cover the upper part of the touch sensing unit 120. In an example, the protection layer 140 may include a protection film, protection glass, or similar protective parts. In addition, the protection layer 140 may be arranged to maintain a reference height so as not to deform or break the outer shapes of the lens hemispheres on the lens array 122 by pressure exerted during a touch input. Accordingly, the protection film 140 may be removed or replaced with another material.

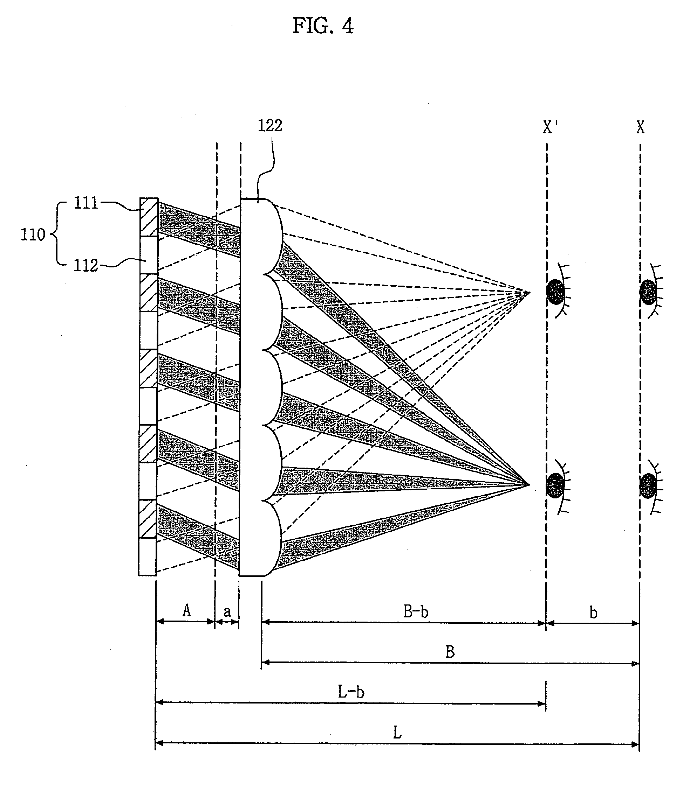

FIG. 4 is a diagram illustrating an operation of controlling a focal length by controlling the position of the lens array in the active-type stereographic image display apparatus to according to an exemplary embodiment of the invention.

A stereographic image is displayed at a distance, provided by the pixels for the left eye 112 and the pixels for the right eye 111 of the image display unit 110, which passes through the lens array 122. Accordingly, a user may be able to see the image at a fixed viewpoint between the lens array 122 and the user.

In an example, the lens driving control unit 130 (not shown in FIG. 4) may adjust the focus of the stereographic image by controlling the interval (distance) between the image display unit 110 and the lens array 122. The image display unit 110 may include the pixels for the left eye 112 and the pixels for the right eye 111.

FIG. 4 illustrates a case where the user's viewpoint changes from X to X'. As shown in FIG. 4, in the case where the user's viewpoint changes from X to X', the distance between the image display unit 110 and the lens array 122 is controlled to increase to a length of $A + a$ from the original length $A$. Similarly, the distance from the lens array 122 to the user's viewpoint is reduced to the length of $B - b$ from the original length of $B$. The total focal length $L$ from the image display unit 110 to the viewpoint at which the stereographic image is displayed is reduced to the length of $L - b$ from the original length of $L$, thereby reducing the focal length of the stereographic image.

On the other hand, if the interval between the image display unit 110 and the lens array 122 is reduced to a length of $A - a$ from the original length of $A$, the total focal length $L$ may be increased to a length of $L + b$ from the original length of $L$, thereby increasing the focal length of the stereographic image. In the case where the distance between the lens array 122 and the user is increased to a length of $B + b$ from the original length of $B$, the distance between the pixel of the image display unit 110 and the lens array 122 may be reduced to length of $A - a$ from the original length of $A$, thereby increasing the focal length of the stereographic image.

The relationships described above may be calculated using Equation 1 and Equation 2. Equation 2 may be calculated from Equation 1.

**[Equation 1]**

$$\frac{1}{A} + \frac{1}{B} = \frac{1}{L} = \frac{2}{r}.$$

**[Equation 2]**

$$B = \frac{AL}{(A-L)} \text{ where } A < L.$$

In Equations 1 and 2, A may be a distance from the image display unit 110 to the lens array 122, *B* may be a focal length from the lens array 122 to a point where an image is displayed, and *L* may be a focal length from the image display unit 110 and the point where the image may be displayed. In addition, *r* may be the radius of curvature of the lens in the lens array 122 and may be a fixed value regardless of the position of the user or the interval between the image display unit 110 and the lens array 122. The lens driving control unit 130 (not shown) may control the value of *A* automatically or according to a user input depending on the user's requirement so as to display an optimized stereographic image.

Referring to Equations 1 and 2, it can be seen that if the distance between the image display unit 110 and the lens array 122 is reduced to a length of *A - a* from the original length of A using the lens driving control unit 130 (not shown), the viewing distance may be increased to a length of *B + b* from the original length of *B*. Therefore, if the lens driving control unit 130 using such a principle is added to the lower end of the lens array 122 to control the length of *A*, the user may see the stereographic image at a desired distance.

As described above, the lens driving control unit 130 may control the focal length of the lens array 122 by changing the interval between the image display unit 110 and the lens array 122. For example, the lens driving control unit 130 may reduce the interval between the image display unit 110 and the lens array 122 to increase the focal length if the distance from the user is or becomes greater than a reference value. Similarly, the interval between the image display unit 110 and the lens array 122 may increase to increase the focal length if the distance from the user is or becomes smaller than the reference value.

The lens driving control unit 130 may change the position of the lens array 122 using a thin film motor. For example, the lenticular lens may be controlled using the thin film motor. The thin film motor may be implemented by configuring a rotation shaft and a magnetic field coil of the motor as thin films through the microelectromechanical systems (MEMS) technique, which uses vapor deposition and etching methods used in a semiconductor manufacturing process. Rotation of the thin film motor may drive the lenticular lens by changing a direction of force using an upward or downward movement of the gears.

In addition, the lens driving control unit 130 may change the position of the lens array 122 using a piezoelectric film of which the amount of contraction or expansion may be changed according to an applied electric signal. For example, if two sheets of piezoelectric films having different contraction or expansion directions are attached to the lenticular lens, and a voltage is applied thereto, physical deformation occurs in a direction in which the film expands. Accordingly, as the contraction or expansion amounts can be controlled by a change in the voltage applied, control over the lenticular lens is possible.

Alternatively, although not shown in the provided figure, the embodiments as described may be used to move the position of the image display unit 110, or a combination of both the image display unit 110 and lens array 122 to control the interval between the image display unit 110 and the lens array 122.

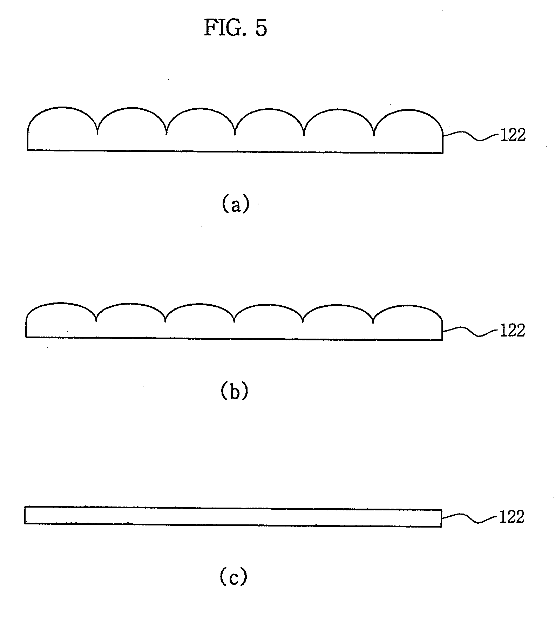

FIG. 5 is a diagram illustrating an operation of controlling the radius of curvature of the lens array in the active-type stereographic image display apparatus according to an exemplary embodiment of the invention.

The lens array 122 may be implemented using a shape memory polymer or a smart material having the same function so as to change the radius of curvature of each lens. Such special materials may be driven by control values externally applied, such as, electricity, temperature, pressure, humidity, and magnetic field.

FIG. 5 illustrates changes in shape of the lens according to varying control values applied externally. More specifically, FIG. 5 (a) illustrates an initial state in which a control value is not applied externally, FIG. 5 (b) illustrates a case where the hemispheric shape of the lens is gently curved by applying a control value, and FIG. 5 (c) illustrates a case where the control value is applied at a maximum level.

As the radius of curvature of the hemispheric shape becomes reduced, the focal length may be increased. Contrastingly, as the radius of curvature becomes increased, the focal length of the stereographic image may be reduced. In an example, if the distance the image display unit 110 from the user becomes greater than a reference value, the lens driving control unit 130 may reduce the radius of curvature of the lens array 122 to deform the lens to be gentle thereby increasing the focal length. Similarly, if the distance the image display unit 110 from the user becomes smaller than the reference value, the length driving control unit 130 may increase the radius of curvature of the lens array 122 to deform the lens to be sharp thereby reducing the focal length.

As described above, the lens driving control unit 130 may control the focal length of the lens array 122 by changing the radius of curvature of the lens array 122. That is, multiple focus regions may be provided by controlling the hemispheric shapes of the lenses, and the focal length of the stereographic image may be controlled to implement the stereographic image display in which the image focus may be actively controlled depending on the user's requirement. Further, the user may change single focus region to multiple focus regions through an input unit of the active-type stereographic image display apparatus, i.e., through buttons or a touch input.

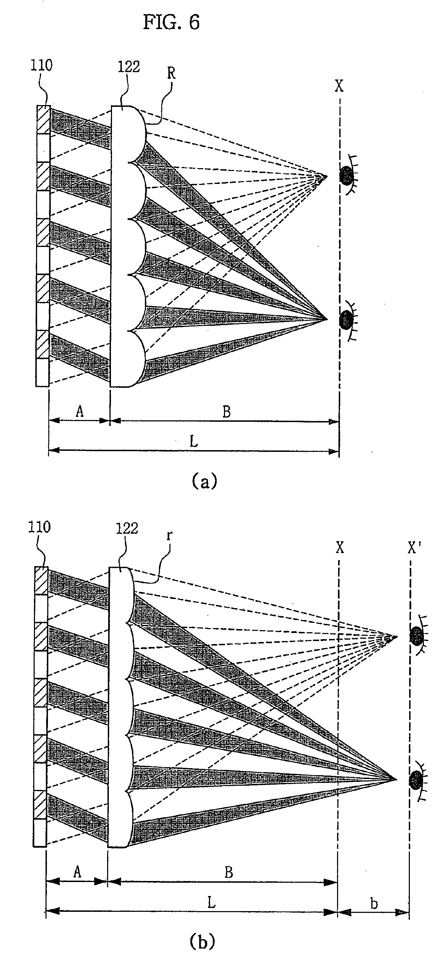

FIG. 6 is a diagram illustrating an operation of controlling the focal length with reference to FIG. 5 according to an exemplary embodiment of the invention. FIG. 6 illustrates an operation of the lens array 122 for changing the shape of the lens according to the control value applied externally. More specifically, a case where the user's viewpoint is changed from X in FIG. 6 (a) to X' in FIG. 6 (b) is illustrated.

As described above, the lens array 122 may be made of a shape memory polymer or a smart material of which the shape may be changed according to the control value applied externally. In the lens array 122 using such a material, the hemispheric shape of the lens may be automatically changed by an operation of the user or by measuring the distance from the user. The lens driving control unit 130 may increase or reduce the value of the radius of curvature of the hemispheric shape of the lens so as to display the optimized stereographic image in consideration of the user's viewpoint.

As shown in FIG. 6 (a), the distance between the image display unit 110 and the lens array 122 is A, the radius of curvature of the lens in the lens array 122 is R, the distance from the lens array 122 to the user's viewpoint is B, and the total focal length from the image display unit 110 to the viewpoint at which the stereographic image is displaced is L.

As shown in FIG. 6 (b), if the user moves from X to X', in order to increase the focal length, the lens driving control unit 130 may reduce the radius of curvature of the lens array 122 from $R$ to $r$, while length of A is fixed. Accordingly, the distance from the lens array 122 to the user's viewpoint is increased to a length of $B + b$, and the total focal length from the image display unit 110 to the viewpoint at which the stereographic image is displayed is increased from an original length of $L$ to a length of $L + b$. Contrastingly, if the radius of curvature of the lens in the lens array 122 is increased, the total focal length is reduced to a length of $L - b$ from the original length of $L$.

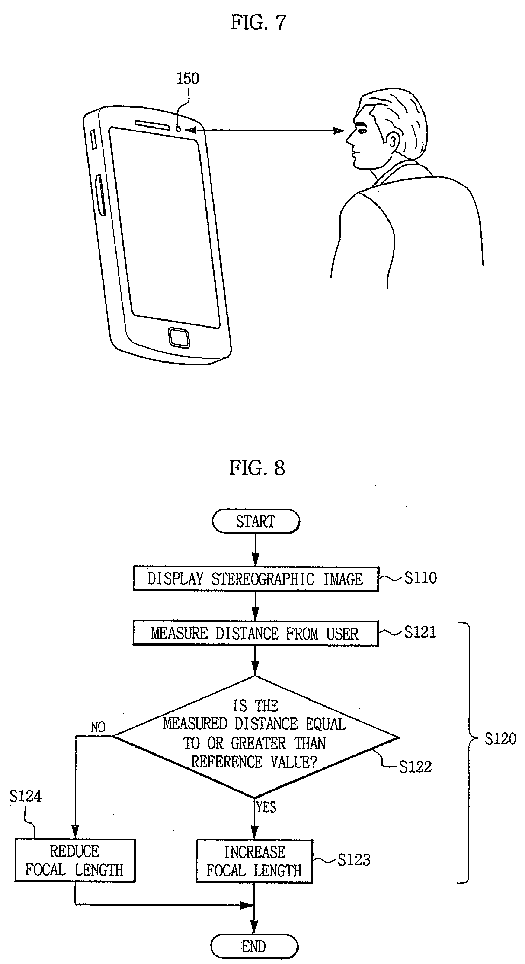

FIG. 7 is a diagram illustrating an operation of measuring a position of a user by the active-type stereographic display apparatus according to an exemplary embodiment of the invention.

The active-type stereographic image display apparatus may be provided with a sensor unit 150 to sense the position of the user or may automatically adjust the focus using a method of calculating distance. In an example where the sensor unit 150 is provided, the lens driving control unit 130 may change the focal length of the lens array 122 based on the distance of the user from the stereographic image display apparatus as measured by the sensor unit 150. In an example, the sensor unit 150 may be provided with a distance sensor, an optical sensor, and the like to measure the distance from the user's viewpoint to the active-type stereographic image display apparatus in real time.

Further, the active-type stereographic display apparatus may adjust the focal length at which the stereographic image is projected according to an operation by the user. In addition, the sensor unit 150 and the lens driving control unit 130 may cooperate with each other to automatically measure the distance between the user and the image display unit 110 and actively adjust the focal length.

FIG. 8 is a flowchart of a driving method of the active-type stereographic image display apparatus according to an exemplary embodiment of the invention. For convenience, FIG. 8 will be described as if the method were performed by active-type stereographic image display apparatus described above. However, the method is not limited as such.

In an example, the active-type stereographic image display apparatus displays a stereographic image from which a left eye image and a right eye image may be separated through the image display unit 110 and the touch sensing unit 120 thereon (S110).

As described above, the image display unit 110 may include the pixels in a matrix form and has a structure in which the pixel for the left eye and the pixel for the right eye which may be arranged alternately in each pixel.

The touch sensing unit 120 may be configured to sense a touch position through a first transparent electrode layer 121 and a second transparent electrode layer 123. In addition, the first transparent electrode layer 121 and a second transparent electrode layer 123 may be formed to intersect each other, and separate the images output from the image display unit 110 through the lens array 122 into the left eye image and the right eye image based on the refractive index of light. Furthermore, the touch sensing unit 120 may be configured to interpose the lens array 122 between the first transparent electrode layer 121 and the second transparent electrode layer 123. Lastly, the first transparent electrode layer 121 and a second transparent electrode layer 123 may be opposed to each other, thereby simultaneously implementing the image filter function for a stereographic image and the capacitive touch screen function for a touch input.

In addition, the active-type stereographic image display apparatus may control the focal length through the lens driving control unit 130 by controlling the lens array 122 mounted in the touch sensing unit 120 (S120). In the focal length controlling process (S120), the active-type stereographic image display apparatus first measures the distance from the user through the sensor unit 150 mounted inside or based on distance calculation (S121). If the measured distance from the user is equal to or greater than the reference value (S122), the lens driving control unit 130 increase the focal length by controlling the lens array 122 (S123). Contrastingly, if the distance from the user measured in S121 is equal to or smaller than the reference value (S122), the lens driving control unit 130 reduces the focal length by controlling the lens array 122 (S124).

During the focal length controlling process (S120), the lens driving control unit 130 may control the focal length of the lens array 122 by changing the interval between the image display unit 110 and the lens array 122. Alternatively, the lens driving control unit 130 may control the focal length of the lens array 122 by changing the radius of curvature of the lens array 122. For example, if the distance from the user is increased, the lens driving control unit 130 may increase the focal length by reducing the radius of curvature of the lens array 122, or by reducing the distance between the image display unit 110 and the lens array 122, or by combination of the two methods. On the other hand, if the distance from the user is reduced, the lens driving control unit 130 may decrease the focal length by increasing the radius of curvature of the lens array 122, or by increasing the interval between the image display unit 110 and the lens array 122, or by combination of the two methods.

Further, in an example, in the method of controlling the focal length by changing the distance between the image display unit 110 and the lens array 122, the distance between the image display unit 110 and the lens array 122 may be controlled by changing the position of the image display unit 110, or by changing the position of the lens array 122, or by combination of the two methods. In addition, the two methods of controlling the distance and of controlling the radius of curvature may be used independently or in combination.

It will be apparent to those skilled in the art that various modifications and variations can be made in the present invention without departing from the scope of the invention. Thus, it is intended that the present invention cover the modifications and variations of this invention provided they come within the scope of the appended claims.

An active-type stereographic image display apparatus includes an image display unit; a touch sensing unit to sense a touch position through a first transparent electrode layer and a second transparent electrode layer that are arranged to cross with each other, and to separate an image output from the image display unit through a lens array into a first eye image and a second eye image based on a refractive index of light; and a lens driving control unit to control a focal length by controlling the lens array. The method for driving the active-type stereographic image includes displaying a stereographic image comprising a first eye image and a separate second eye image, sensing a touch position of a user input, separating an image output into a first eye image and a second eye image, and controlling a focal length provided by a lens array.

**Claims**

1.  An active-type stereographic image display apparatus, comprising:

    an image display unit (110) comprising pixels in a matrix form, wherein a first eye pixel and a second eye pixel are arranged in each pixel; a touch sensing unit (120) adapted to sense a touch position through a first transparent electrode layer (121) and a second transparent electrode layer (123) whereas the electrodes in the first and second electrode layers are arranged in a matrix form to intersect each other, and to separate an image output from the image display unit (110) through a lens array (122) interposed between the first transparent electrode layer (121) and the second transparent electrode layer (123) into a first eye image and a second eye image based on a refractive index of light; and a lens driving control unit (130) adapted to control a focal length by controlling the lens array (122).

2.  The active-type stereographic image display apparatus of claim 1, further comprising a sensor unit adapted to measure a distance from a user.

3.  The active-type stereographic image display apparatus of any of claims 1 or 2, wherein the lens driving control unit (130) is adapted to control the focal length of the lens (122) array by changing an interval between the image display unit (110) and the lens array (122).

4.  The active-type stereographic image display apparatus of claim 3, wherein the lens driving control unit (130) is adapted to change the interval between the image display and the lens array (122) using a thin film motor.

5.  The active-type stereographic image display apparatus of claim 3, wherein the lens driving control unit (130) is adapted to change the interval between the image display (110) and the lens array (122) using a piezoelectric film, a contraction or expansion amount of the piezoelectric film being changed according to an electric signal.

6.  The active-type stereographic image display apparatus of claims 2 and 3, and optionally claims 4 or 5, wherein the lens driving control unit (130) is adapted to reduce the interval between the image display unit (110) and the lens array (122) if the distance from the user is greater than a reference value, and to increase the interval between the image display (110) unit and the lens array (122) if the distance from the user is smaller than the reference value.

7. The active-type stereographic image display apparatus of any of claims 1 to 6, wherein the lens driving control unit (130) is adapted to control the focal length of the lens array (122) by changing a radius of curvature of the lens array (122).

8. The active-type stereographic image display apparatus of claims 2 and 7, wherein the lens driving control unit (130) is adapted to reduce the radius of curvature of the lens array (122) if the distance from the user is greater than a reference value, and to increase the radius of curvature of the lens array if the distance from the user is smaller than the reference value.

9. The active-type stereographic image display apparatus of claim 7 or 8, wherein the lens array (122) comprises a shape memory polymer or a smart material to change a radius of curvature of a lens.

10. The active-type stereographic image display apparatus of any of claims 1 to 9, wherein the lens array (122) comprises a plurality of lenticular lenses.

11. A method for driving an active-type stereographic image display, comprising:

    displaying a stereographic image comprising a first eye image and a separate second eye image;
    sensing a touch position of a user input through a first transparent electrode layer and a second transparent electrode layer and a second transparent electrode layer whereas the electrodes in the first and second electrode layers are arranged in a matrix form to intersect each other;
    separating an image output through a lens array interposed between the first transparent electrode layer and the second transparent electrode layer into a first eye image and a second eye image; and
    controlling a focal length provided by the lens array.

12. The method of claim 11, wherein controlling the focal length comprises:

    measuring a distance from an image display to a user;
    increasing the focal length if the distance from the user is greater than a reference value; and

reducing the focal length if the distance from the user is smaller than the reference value.

13. The method of claim 11 or 12, wherein controlling the focal length comprises changing an interval between the image display unit (110) and the lens array (122).

14. The method of claim 11 or 12, wherein controlling the focal length comprises changing a radius of curvature of the lens array (122).

**Patentansprüche**

1. Stereographische Bildanzeige-Einrichtung vom aktiven Typ, umfassend:

    eine Bildanzeige-Einheit (110), die Pixel in einer Matrix-Form umfasst, wobei ein erstes-Auge-Pixel und ein zweites-Auge-Pixel in jedem Pixel angeordnet sind,
    eine Berührung-Erfassungseinheit (120), die dazu angepasst ist, eine Berührposition durch eine erste transparente Elektrodenschicht (121) und eine zweite transparente Elektrodenschicht (123) zu erfassen, wohingegen die Elektroden in der ersten und der zweiten Elektrodenschicht in einer Matrixform angeordnet sind, so dass sie einander schneiden, und eine Bildausgabe von der Bildanzeige-Einheit (110) durch eine Linsenanordnung (122), die zwischen der ersten transparenten Elektrodenschicht (121) und der zweiten transparenten Elektrodenschicht (123) angeordnet ist, auf Basis eines Licht-Brechungsindex in ein erstes-Auge-Bild und ein zweites-Auge-Bild zu separieren, und eine Linsenantrieb-Steuer-/Regeleinheit (130), die dazu angepasst ist, eine Brennweite durch Steuern/Regeln der Linsenanordnung (122) zu steuern/regeln.

2. Stereographische Bildanzeige-Einrichtung vom aktiven Typ nach Anspruch 1, weiter umfassend eine Sensoreinheit, die dazu angepasst ist, eine Distanz von einem Benutzer zu messen.

3. Stereographische Bildanzeige-Einrichtung vom aktiven Typ nach einem der Ansprüche 1 oder 2, wobei die Linsenantrieb-Steuer-/Regeleinheit (130) dazu angepasst ist, die Brennweite der Linsenanordnung (122) zu steuern/regeln, indem ein Abstand zwischen der Bildanzeige-Einheit (110) und der Linsenanordnung (122) geändert wird.

4. Stereographische Bildanzeige-Einrichtung vom aktiven Typ nach Anspruch 3, wobei die Linsenantrieb-Steuer-/Regeleinheit (130) dazu angepasst ist, den Abstand zwischen der Bildanzeige und der Linsenanordnung (122) unter Verwendung von einem Dünnschicht-Motor zu ändern.

5. Stereographische Bildanzeige-Einrichtung vom aktiven Typ nach Anspruch 3, wobei die Linsenantrieb-Steuer-/Regeleinheit (130) dazu angepasst ist, den Abstand zwischen der Bildanzeige (110) und der Linsenanordnung (122) unter Verwendung von einem piezoelektrischen Film zu ändern, wobei ein Kontraktions- oder Expansions-Betrag von dem piezoelektrischen Film gemäß einem elektrischen Signal geändert wird.

6. Stereographische Bildanzeige-Einrichtung vom aktiven Typ nach Ansprüchen 2 und 3, und optional Ansprüchen 4 oder 5, wobei die Linsenantrieb-Steuer-/Regeleinheit (130) dazu angepasst ist, den Abstand zwischen der Bildanzeige-Einheit (110) und der Linsenanordnung (122) zu reduzieren, wenn die Distanz von dem Benutzer größer ist als ein Referenzwert, und den Abstand zwischen der Bildanzeige-Einheit (110) und der Linsenanordnung (122) zu vergrößern, wenn die Distanz von dem Benutzer kleiner als der Referenzwert ist.

7. Stereographische Bildanzeige-Einrichtung vom aktiven Typ nach einem der Ansprüche 1 bis 6, wobei die Linsenantrieb-Steuer-/Regeleinheit (130) dazu angepasst ist, die Brennweite der Linsenanordnung (122) zu steuern/regeln, indem ein Krümmungsradius der Linsenanordnung (122) verändert wird.

8. Stereographische Bildanzeige-Einrichtung vom aktiven Typ nach Ansprüchen 2 und 7, wobei die Linsenantrieb-Steuer-/Regeleinheit (130) dazu angepasst ist, den Krümmungsradius der Linsenanordnung (122) zu reduzieren, wenn die Distanz von dem Benutzer größer als ein Referenzwert ist, und den Krümmungsradius der Linsenanordnung zu vergrößern, wenn die Distanz von dem Benutzer kleiner als der Referenzwert ist.

9. Stereographische Bildanzeige-Einrichtung vom aktiven Typ nach Anspruch 7 oder 8, wobei die Linsenanordnung (122) ein Formgedächtnis-Polymer oder einen intelligenten Werkstoff umfasst, um einen Krümmungsradius einer Linse zu ändern.

10. Stereographische Bildanzeige-Einrichtung vom aktiven Typ nach einem der Ansprüche 1 bis 9, wobei die Linsenanordnung (122) eine Mehrzahl von lentikularen Linsen umfasst.

11. Verfahren zum Antreiben einer stereographischen Bildanzeige-Einrichtung vom aktiven Typ, umfassend:

Anzeigen eines stereographischen Bildes, welches ein erstes-Auge-Bild und ein separates zweites-Auge-Bild umfasst,
Erfassen einer Berührposition einer Benutzereingabe durch eine erste transparente Elektrodenschicht und eine zweite transparente Elektrodenschicht und eine zweite transparente Elektrodenschicht, wohingegen die Elektroden in der ersten und der zweiten Elektrodenschicht in einer Matrixform angeordnet sind, so dass sie einander schneiden,
Separieren einer Bildausgabe durch eine zwischen der ersten transparenten Elektrodenschicht und der zweiten transparenten Elektrodenschicht angeordneten Linsenanordnung in ein erstes-Auge-Bild und ein zweites-Auge-Bild und
Steuern/Regeln einer Brennweite, die durch die Linsenanordnung vorgesehen ist.

12. Verfahren nach Anspruch 11, wobei das Steuern/Regeln der Brennweite umfasst:

Messen einer Distanz von einer Bildanzeige zu einem Benutzer,
Vergrößern der Brennweite, wenn die Distanz von dem Benutzer größer als ein Referenzwert ist, und
Reduzieren der Brennweite, wenn die Distanz von dem Benutzer kleiner als der Referenzwert ist.

13. Verfahren nach Anspruch 11 oder 12, wobei das Steuern/Regeln der Brennweite umfasst, einen Abstand zwischen der Bildanzeige-Einheit (110) und der Linsenanordnung (122) zu ändern.

14. Verfahren nach Anspruch 11 oder 12, wobei das Steuern/Regeln der Brennweite umfasst, einen Krümmungsradius der Linsenanordnung (122) zu ändern.

**Revendications**

1. Appareil d'affichage d'images stéréographiques de type actif, comprenant:

une unité d'affichage d'images (110) avec pixels sous forme de matrice, **caractérisé en ce que** chaque pixel est constitué d'un premier pixel perceptible à l'oeil nu et d'un second pixel perceptible à l'oeil nu;
une unité de captage de touches (120) est adaptée pour, d'une part, capter la position d'une touche par l'intermédiaire d'une première couche d'électrodes transparente (121) et d'une seconde couche d'électrodes transparente (123), les électrodes des première et deuxième couches d'électrodes étant organisées sous la forme d'une matrice et s'entrecroisant, et pour, d'autre part, séparer une image produite de l'unité d'affichage d'images (110) par l'intermédiaire d'un jeu de lentilles (122) interposées entre la première couche d'électrodes transparente (121) et la deuxième couche d'électrodes transparente (123), de manière à former une première image perceptible à l'oeil nu et une deuxième image perceptible à l'oeil nu, basée sur un indice de réfraction de la lumière; et

une unité de contrôle de la commande des lentilles (130) adaptée pour contrôler une longueur focale en contrôlant le jeu de lentilles (122).

2. L'appareil d'affichage d'images stéréographiques de type actif de la revendication 1, comprenant également une unité de captage adaptée pour mesurer une distance par rapport à un utilisateur.

3. L'appareil d'affichage d'images stéréographiques de type actif de la revendication 1 ou 2, **caractérisé en ce que** l'unité de contrôle de la commande des lentilles (130) est adaptée pour contrôler la longueur focale du jeu de lentilles (122) en changeant un intervalle entre l'unité d'affichage d'images (110) et le jeu de lentilles (122).

4. L'appareil d'affichage d'images stéréographiques de type actif de la revendication 3, **caractérisé en ce que** l'unité de contrôle de la commande des lentilles (130) est adaptée pour changer un intervalle entre l'affichage d'images et le jeu de lentilles (122), à l'aide d'un moteur à film fin.

5. L'appareil d'affichage d'images stéréographiques de type actif de la revendication 3, **caractérisé en ce que** l'unité de contrôle de la commande des lentilles (130) est adaptée pour changer l'intervalle entre l'unité d'affichage d'images (110) et le jeu de lentilles (122) à l'aide d'un film piézoélectrique, un montant de contraction ou d'expansion du film piézoélectrique étant modifié en fonction d'un signal électrique.

6. L'appareil d'affichage d'images stéréographiques de type actif des revendications 2 et 3 et, en option, de la revendication 4 ou 5, **caractérisé en ce que** l'unité de contrôle de la commande des lentilles (130) est adaptée pour réduire l'intervalle entre l'unité d'affichage d'images (110) et le jeu de lentilles (122) si la distance par rapport à l'utilisateur excède une valeur de référence, et pour accroître l'intervalle entre l'unité d'affichage d'images (110) et le jeu de lentilles (122) si la distance par rapport à l'utilisateur est inférieure à la valeur de référence.

7. L'appareil d'affichage d'images stéréographiques de type actif de l'une quelconque des revendications 1 à 6, **caractérisé en ce que** l'unité de contrôle de la commande des lentilles (130) est adaptée pour contrôler la longueur focale du jeu de lentilles (122) en modifiant un rayon de courbure du jeu de lentille (122).

8. L'appareil d'affichage d'images stéréographiques de type actif des revendications 2 et 7, **caractérisé en ce que** l'unité de contrôle de la commande des lentilles (130) est adaptée pour réduire le rayon de courbure du jeu de lentilles (122) si la distance par rapport à l'utilisateur excède une valeur de référence, et pour accroître le rayon de courbure du jeu de lentilles si la distance par rapport à l'utilisateur est inférieure à la valeur de référence.

9. L'appareil d'affichage d'images stéréographiques de type actif de la revendication 7 ou 8, **caractérisé en ce que** le jeu de lentilles (122) comprend un polymère à mémoire de forme ou un matériau intelligent en vue de modifier un rayon de courbure d'une lentille.

10. L'appareil d'affichage d'images stéréographiques de type actif de l'une quelconque des revendications 1 à 9, **caractérisé en ce que** le jeu de lentilles (122) comprend une multitude de lentilles lenticulaires.

11. Procédé de commande d'un affichage d'images stéréographiques de type actif, comprenant:

l'affichage d'une image stéréographique comprenant une première image visuelle et une deuxième image visuelle séparée;
le captage d'une position de touche d'une entrée utilisateur par l'intermédiaire d'une première couche d'électrodes transparente et d'une deuxième couche d'électrodes transparentes, les électrodes de la première et de la deuxième couches d'électrodes étant organisés en matrice, de manière à s'entrecroiser;
la séparation d'une image produite par l'intermédiaire d'un jeu de lentilles interposées entre la première couche d'électrodes transparente et la deuxième couche d'électrodes transparente, pour former une première image visuelle et une deuxième image visuelle; et
le contrôle d'une longueur focale fournie par le jeu de lentilles.

12. Le procédé de la revendication 11, **caractérisé en ce que** le contrôle de la longueur focale comprend:

la mesure d'une distance entre une unité d'affichage d'image et un utilisateur;
l'augmentation de la longueur focale si la distance par rapport à l'utilisateur excède une valeur de référence; et

la réduction de la longueur focale si la distance par rapport à l'utilisateur est inférieure à la valeur de référence.

13. Le procédé de la revendication 11 ou 12, **caractérisé en ce que** le contrôle de la longueur focale implique le changement d'un intervalle entre l'unité d'affichage d'image (110) et le jeu de lentilles (122).

14. Le procédé de la revendication 11 ou 12, **caractérisé en ce que** le contrôle de la longueur focale implique la modification d'un rayon de courbure du jeu de lentilles (122).

FIG. 1

(a)

(b)

## FIG. 2

FIG. 3

FIG. 4

FIG. 5

~122

(a)

~122

(b)

~122

(c)

FIG. 6

(a)

(b)

## FIG. 7

## FIG. 8

**EP 2 413 609 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009069358 A1
- US 2009256821 A1
- US 5493427 A
- US 2003161040 A1